# EUROPÄISCHE PATENTSCHRIFT

(11) **EP 2 848 108 B1**
(45) Veröffentlichungstag und Bekanntmachung des Hinweises auf die Patenterteilung: **27.04.2016**
(21) Anmeldenummer: 14401090.7
(22) Anmeldetag: 28.08.2014
(51) Int. Cl.: A01B 15/14

(54) **Pflug**
Plough
Charrue

(30) Priorität: 04.09.2013 DE 102013109634
(43) Veröffentlichungstag der Anmeldung: 18.03.2015
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE); Withake, Gustav, 48496 Hopsten (DE)

(56) Entgegenhaltungen:
- DE-A1- 3 739 141
- DE-A1- 10 039 600

## Beschreibung

Die Erfindung betrifft einen Pflug gemäß des Oberbegriffes des Patentanspruches 1.

Ein derartiger Pflug ist beispielsweise in der DE 100 39 600 A1 beschrieben. Diese Pflüge weisen einen in einer horizontalen Ebene zur Einstellung der Arbeitsbreite verschwenkbaren Pflugrahmen auf. An diesem Pflugrahmen sind um aufrechte Achsen verschwenkbare Pflugschare angeordnet. Durch die Verschwenkung des Pflugrahmens gegenüber dem Anbaubock und die Verschwenkung der Pflugschare gegenüber dem Pflugrahmen lässt sich die Arbeitsbreite des Pfluges und die Schnittbreite der einzelnen Pflugschare einstellen. Bei der Einstellung der Arbeitsbreite durch Verschwenken des Pflugrahmens werden auch die Pflugschare so verschwenkt, dass die Pflugschare ihre vorgesehene Position zur Arbeits- und/oder Pflugrichtung beibehalten. Wenn nun die Pflugschare zusätzlich unabhängig von der Einstellung der Arbeitsbreite durch Verschwenken gegenüber dem Pflugrahmen zur Veränderung des Anlagedruckes der Pflugschare gegenüber dem Pflugrahmen verstellt werden, ändert sich auch die Arbeitsbreite und der Arbeitsbreitenbereich des Pfluges sowie die Schnittbreite des ersten Pflugkörpers. Um hier eine Korrektur durchzuführen, damit der Arbeitsbreitenbereich des Pfluges in diesem Zusammenhang auf seinen werksseitig und konstruktiv vorgegebenen Arbeitsbreitenbereich zurückgeführt werden kann, gibt es bisher keine praktikable Möglichkeit.

Der Erfindung liegt die Aufgabe zugrunde, eine einfache Korrekturmöglichkeit zur Beibehaltung der eingestellten Arbeitsbreite und des Arbeitsbreitenbereiches des Pfluges bei Veränderung des Anlagedruckes für die Pflugschare durch eine veränderte Einstellposition der Scharkörper gegenüber dem Pflugrahmen zu schaffen.

Diese Aufgabe wird erfindungsgemäß dadurch gelöst, dass zumindest dem zweiten Stellglied ein verstellbares Stellelement zur zusätzlichen Längenveränderung des zweiten Stellgliedes zugeordnet ist.

Infolge dieser Maßnahme wird durch das dem zweiten Stellglied zugeordnete verstellbare Stellelement eine einfache Kompensationsmöglichkeit geschaffen, um den Arbeitsbreitenbereich und die Erstkörperschnittbreite, die vor Veränderung der Einstellposition der Scharkörper zur Veränderung des Anlagedruckes eingestellt war, wieder einzustellen. Somit wird durch die neue Verstellmöglichkeit bei Veränderung des Anlagedruckes für die Scharkörper die sich an sich verändernd eingestellte Arbeitsbreite und der daraus resultierenden Arbeitsbreitenänderung der Scharkörper in einfacher Weise durch das Verschwenken der Pflugscharkörper gegenüber dem Pflugrahmen wieder kompensiert. Die unterschiedliche Winkeleinstellung der Scharkörper zur Arbeits- und/oder Pflugrichtung dient zur Anpassung an unterschiedliche Einsatzbedingungen, wie dies beispielsweise für das Pflügen am Hang für ein gutes Pflügeergebnis erforderlich ist. Bisher hat man die Nachteile bei Veränderung des Anlagedruckes in Kauf genommen. Diese Nachteile werden durch diese einfache erfindungsgemäße Maßnahme beseitigt werden, in dem eine kombinierte Anlagendruckverstellung mit zusätzlicher Arbeitsbreitenkorrekturverstellung erstmals ermöglicht wird.

Einfach ausgedrückt, es wird mit der erfindungsgemäßen Maßnahme die durch eine Längenänderung des zweiten Stellgliedes für die Veränderung des Anlagedruckes an sich einhergehende Verstellung des Arbeitsbreitenbereiches des Pfluges und der Schnittbreite der einzelnen Körper durch die Längenänderung des zugeordneten Stellelementes wieder zurückgenommen bzw. kompensiert. Üblicherweise sind sie die Stellglieder einerseits mittels einem Lager- oder Befestigungsauge an dem Rahmen oder Pflugrahmen befestigt und andererseits mittels einer Schaubverbindung auf das Stangenelement oder die Kolbenstange der Stellgliedes aufgeschraubt. Diese Schaubverbindung ist in ihrer Länge beim Stand der Technik auf das für eine sichere Verbindung der miteinander verschraubten Elemente erforderliche Mindestmaß ausgelegt. Hierbei ist berücksichtigt, dass lediglich eine Verstellung über die Schraubverbindung zum Ausgleich von Fertigungstoleranzen in der Größenordnung von 2-3 mm möglich ist. Das erfindungsgemäße Stellelement ist über die Schaubverbindung mit dem Stellglied in der Weise verbunden, dass ein Stellbereich von 15-50 mm, vorzugsweise 20-30 mm vorgesehen sind. Somit ermöglicht das dem Stellglied zugeordnete Stellelement eine zusätzliche Verstellung um 20-30 mm.

In einfacher Weise lässt sich die erfindungsgemäße Maßnahme dadurch realisieren, dass das zweite Stellglied motorisch und das zugeordnete Stellelement mechanisch ausgebildet ist. Somit lässt sich einerseits wie bisher die üblichen Pflugein- und -verstellungen fernbedient bequem vornehmen und anderseits die erfindungsgemäße Korrektur einfach von Hand durchführen.

Die optimierte Einstellung des Pfluges wird in einfacher Weise dadurch erreicht, dass mittels des dem zweiten Stellglied zugeordneten mechanischen Stellelementes die Grundeinstellung der Verschwenkung des Pflugrahmens festlegbar ist.

Bei einem Pflug, bei dem das zweite motorische Stellglied als eine Kolbenstange aufweisender doppeltwirkender Hydraulikzylinder ausgebildet ist, ist vorgesehen, dass das zugeordnete mechanische Stellelement als Stellschraube oder Stellspindel ausgebildet, dass die Stellschraube oder Stellspindel Bestandteil der Kolbenstange ist. Hierdurch wird eine einfache Ausgestaltung der Kompensationsmöglichkeit zur Einstellung des Pfluges bei Veränderung des Anlagedruckes erreicht.

Eine einfache Anordnung der Einstellmöglichkeit lässt sich dadurch erreichen, dass die Stellschraube oder Stellspindel an dem vorderen Ende der Kolbenstange angeordnet ist.

In einer bevorzugten Ausführungsform ist vorgesehen, dass die Stellschraube oder Stellspindel zwischen dem vorderen Ende der Kolbenstange einerseits und dem Lenker oder Pflugrahmen andererseits angeordnet ist.

Bei einem Pflug, bei dem das zweite, motorisch ausgebildete Stellglied als eine Kolbenstange aufweisender doppeltwirkender Hydraulikzylinder ausgebildet ist, ist vorgesehen, dass das mechanische Stellelement als Stellschraube oder Stellspindel ausgebildet, dass die Stellschraube oder Stellspindel zwischen dem der Zylinder des Hydraulikzylinders einerseits und dem Lenker oder Pflugrahmen andererseits angeordnet ist. Hierdurch ergibt sich ein einfacher Aufbau der Einstellmöglichkeit des Pfluges.

Anstelle das verstellbare mechanische Stellelement als verstellbares Schraubelement, welches dem zweiten Stellglied zugeordnet ist, kann dieses beispielsweise auch als Exzenterelement ausgebildet sein.

Weitere Einzelheiten der Erfindung sind der Beispielsbeschreibung zu entnehmen. Die Zeichnungen zeigen
- Fig.1: den Pflug in der Ausgangseinstellung, wobei die Anlageschienen der Scharkörper parallel zur Arbeitsrichtung angestellt sind, in der Draufsicht und in Prinzipdarstellung,
- Fig.2: den Pflug nach Fig.1 in Teilansicht und vergrößertem Maßstab,
- Fig. 3: den Pflug in der Darstellungsweise gemäß Fig.1, wobei jedoch ein erhöhter Anlagedruck für die Scharkörper durch deren Verschwenken gegenüber dem Pflugrahmen einstellt ist,
- Fig.4: die beiden Einstellvarianten nach Fig.1 und 3 zur Veranschaulichung übereinander gelegt,
- Fig.5: den Pflug in der Darstellungsweise gemäß Fig.1, wobei jedoch ein erhöhter Anlagedruck für die Scharkörper durch deren Verschwenken gegenüber dem Pflugrahmen einstellt ist und die Veränderung von Arbeitsbreite und Erstkörperschnittbreite durch die erfindungsgemäße Verstellung kompensiert ist,
- Fig.6: den Pflug nach Fig.5 in Teilansicht und vergrößertem Maßstab,

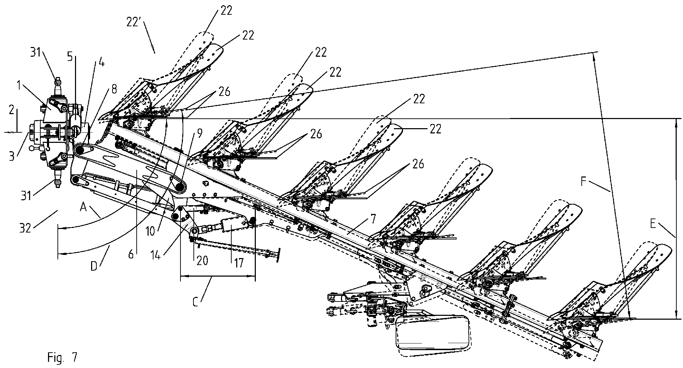

- Fig.7: die beiden Einstellvarianten nach Fig.3 und 5 zur Veranschaulichung übereinander gelegt,
- Fig.8: das als Hydraulikzylinder ausgebildete zweite Stellglied mit dem zugeordneten mechanischen Stellelement in der Einstellung nach Fig. 1 und
- Fig.9: das als Hydraulikzylinder ausgebildete zweite Stellglied mit dem zugeordneten mechanischen Stellelement in der Einstellung nach Fig.4.

Der als Drehpflug ausgebildete Pflug weist den Anbaubock 1 auf. An dem Anbaubock 1 das um eine in Fahrtrichtung 2 weisende Drehachse 3 drehbar angeordnete Drehgestell 4 angeordnet. Zwischen dem Anbaubock 1 und dem Drehgestell 3 ist der hydraulische Drehzylinder 5 angeordnet. An dem Drehgestell 3 ist mittels der tragenden Tragschwinge 6 der als Rechteckrohr ausgebildete Pflugrahmen 7 befestigt. Die Tragschwinge 6 ist mittels des Gelenkes 8 über das Drehgestell 3 an dem Anbaubock 1 und mittels des Gelenkes 9 an dem Pflugrahmen 6 angeordnet. Die Schwenkachse des Gelenkes 8 und 9 verläuft in Betriebsstellung des Pfluges aufrecht.

Desweiteren weist die Tragschwinge 6 im Bereich des Gelenkes 9 einen mit diesem fest verbundenen Winkelhebel 10 auf. Zwischen dem Drehgestell 3 und dem Winkelhebel 10 ist der hydraulische Einschwenkzylinder 11 mittels dem Gelenkbolzen des Gelenkes 12 und einem weiteren Gelenkbolzen am Winkelhebel 10, beabstandet zu dem Gelenk 9 angelenkt. Weiterhin ist der Zusatzlenker 13 mittels des Gelenke 12 zwischen an dem Drehgestell 4 und mittels des Gelenkes 14 an dem Zwischenlenker 15 angeordnet. Die Tragschwinge 6, der Zusatzlenker 13 sowie der zugeordnete Einschwenkzylinder 11 bilden die Querverstellungseinrichtung des Pfluges. Das eine Ende des Zwischenhebels 15 ist am Gelenkbolzen des Gelenkes 9 angelenkt. Das andere Ende des Zwischenhebels 15 ist über den Gelenkbolzen des Gelenkes 16 mit dem kolbenstangenseiten Ende des hydraulischen Arbeitsbreitenzylinders 17 verbunden. Das andere Ende des Arbeitsbreitenzylinders 17 ist über den Gelenkbolzen des Gelenkes 18 mit dem Pflugrahmen 7 verbunden. Das Gelenk 14 befindet sich zwischen den Gelenken 9 und 16. Außerdem ist mittels des Gelenkbolzens des Gelenkes 19, welches sich zwischen den Gelenken 9 und 16 an dem Zwischenlenker 15 befindet, das eine Ende der Einstellspindel 20 angeordnet. Das andere Ende der Einstellspindel 20 ist an den die Verschwenkhebel 21 der Pflugschare 22 miteinander verbindenden Verbindungsstange 23 angeordnet.

Die Einstellspindel 20 bildet das erste Einstellglied, während der Arbeitsbreitenzylinder 17 das zweite Stellglied bildet.

Die Pflugschare 22 sind jeweils mittels der eine aufrechte Schwenkachse 24 aufweisen den Gelenkanordnungen 25 an dem Pflugrahmen 7 zur Änderung ihres Einstellwinkels gegenüber dem Pflugrahmen 7 verschwenkbar befestigt. Die Gelenkanordnungen 25 der Pflugschare 22 weisen die mit den Pflugscharen 22 verbundenen der Schwenkhebel 21 auf. Über die Einstellspindel 20 sind die Pflugschare 22 gegenüber dem Pflugrahmen 7 verschwenkbar. Hierüber ist die Arbeitsbreite jedes Pflugschares 22 und die Erstfurchenschnittbreite des ersten Pflugschares 22 einzustellen. Weiterhin lässt sich über die Einstellspindel 20 der Anlagedruck der als Führungsschiene 26 ausgebildeten sogenannten Anlage des jeweiligen Pflugschares 22 und/oder der Schnittwinkel der Pflugschare 22 zur Flugfurche einstellen.

Der Arbeitsbreitenzylinder 17 ist als doppeltwirkender Hydraulikzylinder ausgebildet und weist die Kolbenstange 27 auf. Das vordere Ende der Kolbenstange 27 weist ein Schraubgewinde 28 auf. Auf diese Schraubgewinde 28 ist das Lager- oder Befestigungsauge 29 für die Befestigung des Arbeitsbreitenzylinders 17 an dem Gelenkbolzen des Gelenkes 18 angeordnet. Diese Schraubverbindung 30 zwischen der Kolbenstange 27 und dem Lager- oder Befestigungsauge 29 gebildet dass dem Arbeitsbreitenzylinder 17 zugeordnete mechanische Stellelement 29. Dieses mechanische Stellelement 29 ist gegenüber dem Stellglied 15-50 mm, vorzugsweise 20-30 mm vorzugsweise über die Schaubverbindung 30 verstellbar. Hierdurch ist dem zweiten Stellglied ein verstellbares Stellelement zur zusätzlichen Längenveränderung des zweiten Stellgliedes zugeordnet.

Somit ist das dem Arbeitsbreitenzylinder 17 zugeordnete mechanische Stellelement 29 als Stellschraube oder Stellspindel ausgebildet. Die Stellschraube 29 oder Stellspindel an dem vorderen Ende der Kolbenstange 27 angeordnet. Im Ausführungsbeispiel ist die Stellschraube 29 oder Stellspindel zwischen dem vorderen Ende der Kolbenstange 27 einerseits und dem Lenker 14 somit dem Pflugrahmen 7 andererseits angeordnet.

Mittels des dem als Arbeitsbreitenzylinder 17 ausgebildeten zweiten Stellgliedes zugeordneten mechanischen Stellelement 29 ist die Grundeinstellung der Verschwenkung des Pflugrahmens 7 fest zulegen.

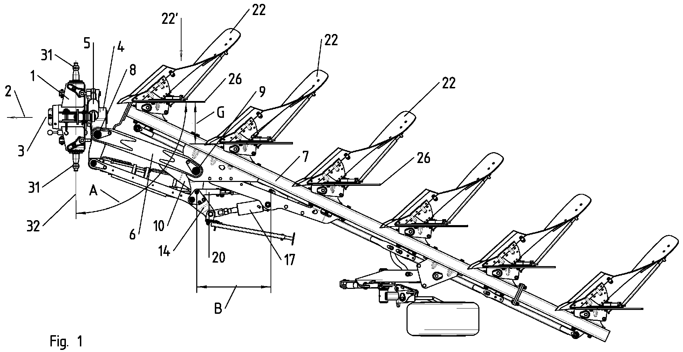

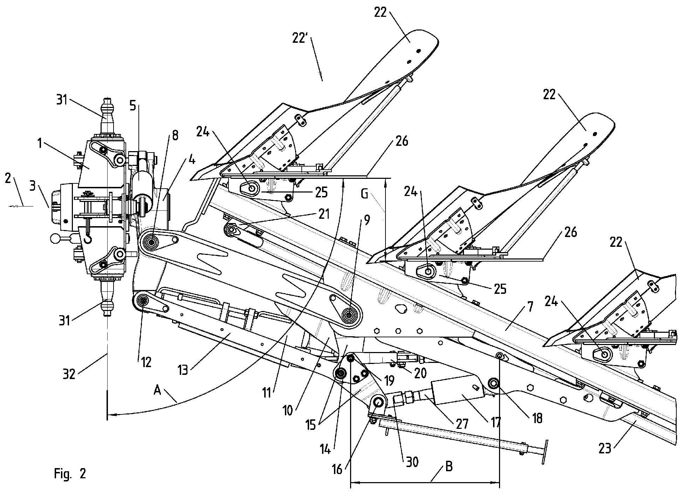

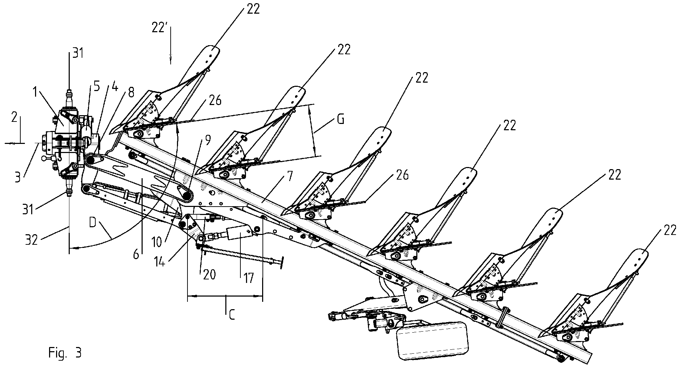

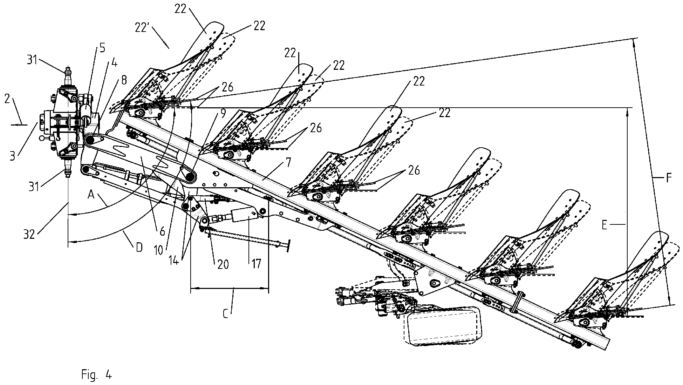

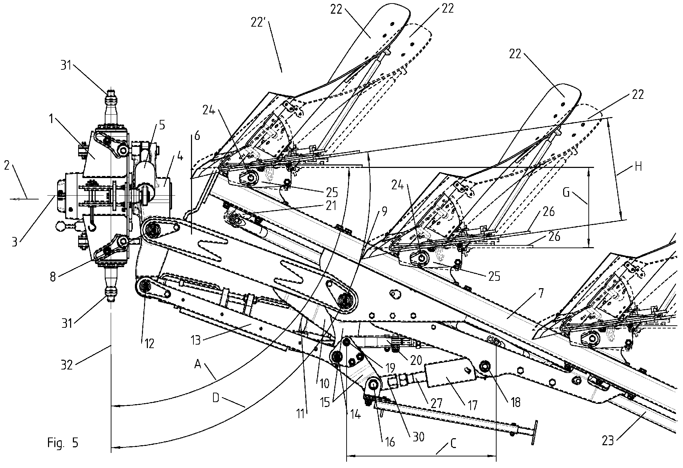

Gemäß des Ausführungsbeispieles nach Fig.1 ist die jeweilige Führungsschiene 26 der Pflugschare 22 parallel zur Arbeitsrichtung 2 ausgerichtet. Der Anstellwinkel A der Führungsschiene 26 der Pflugschare 22, der zwischen der Führungsschiene 26 und der durch die Unterlenker 31 des Anbaubockes 1 verlaufenden Geraden 32, die rechtwinklig zur Arbeitsrichtung 2 verläuft, gemessen wird, beträgt 90°. Wenn der Anlagedruck der Pflugschare 24 verändert werden soll, wird über die Einstellspindel 20 die Verbindungsstange 23 verschoben und hierüber die einzelnen Pflugschare 22 jeweils um die aufrechte Schwenkachse 24 der Gelenksanordnungen 25 verschwenkt, so dass die Pflugschare 22 die Position gemäß Fig.3 einnehmen. Hier wird die Einstellspindel 20 von der Ausgangslänge B in Fig. 1 und 2 auf die vergrößerte Länge C in Fig.4 und 5 eingestellt. Hierdurch werden Pflugschare 22 entsprechend verschwenkt. Nach der Verschwenkung der Pflugschare in die Position gemäß Fig.3 ist der Anstellwinkel auf das Maß D vergrößert worden, wie Fig 4 verdeutlicht. Im Ausführungsbeispiel ist zur Verdeutlichung ein wesentlich größerer Verschwenkwinkel für die Pflugschare 22 dargestellt, wie er in der Praxis relevant ist. In der Praxis erfolgt üblicherweise eine maximale Verschwenkung aus der Grundeinstellung gemäß Fig.1 von plus/minus 2 - 3°. Um diese Verstellung der Pflugschare 22 von der Einstellung gemäß Fig. 1 nach Fig. 3 einfach deutlich zu machen, sind in Fig. 4 diese beiden Einstellungen übereinander gelegt dargestellt. Mit gestrichelten Linien ist Fig. 4 die Ausgangsposition gemäß Fig.1 und durchzogenen Linien sind Pflugschare nach ihrer Verschwenkung zur Erhöhung des Anlagedruckes gemäß Fig 3. dargestellt.

Durch die vorgeschriebene Verschwenkung der Pflugschare 22 zur Erhöhung des Anlagedruckes der Pflugschare 22 hat sich gleichzeitig der Arbeitsbreitenbereich des Pfluges verschoben und die Schnittbreite des ersten Pflugkörpers 22' verändert, wie die Fig. 4 verdeutlicht. Hierbei ist er der Arbeitsbreitenbereich für die Einstellung gemäß Fig.1 und 2 mit E und der Arbeitsbreitenbereich gemäß Fig.4 und 5 mit F bezeichnet. Weiterhin hat sich die Arbeitsbreite G eines Pflugschares 22 gemäß der Einstellung nach Fig. 1 auf die größere Arbeitsbreite H gemäß Fig.4 verändert.

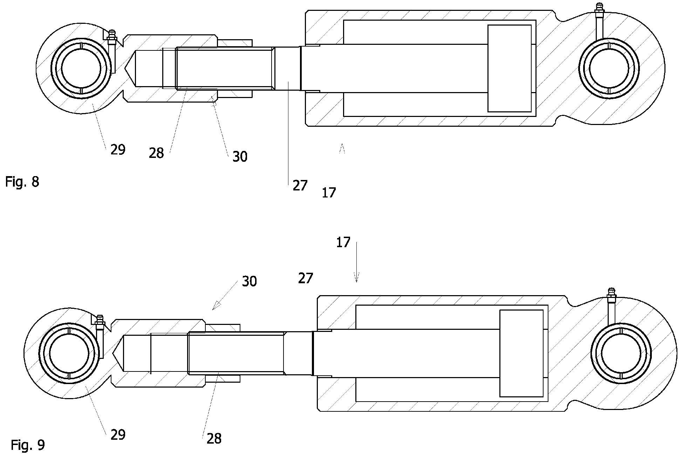

Die erfindungsgemäße Einstellung und Korrektur des Pfluges erfolgt dann in folgender Weise:
Um jedoch auch bei veränderten Anlagedruck durch das vorbeschriebene Verschwenken der Pflugschare aus der Position gemäß Fig 1 in die Position gemäß Fig.3 wieder die gleiche Arbeitsbreite eine Pflugschares 22 sowie den gleichen Arbeitsbreitenbereich gemäß der Ausgangseinstellung nach Fig.1 zu erhalten wird jetzt die erfindungsgemäße Kompensation dieser Veränderungen durch die Verstellung des dem Arbeitsbreitenzylinders 17 zugeordnete Stellelement 29 vorgenommen. Bei dem Ausführungsbeispiel wird hierzu über die Schraubverbindung 30 das mechanische Stellelement 29 aus der Position gemäß den Fig.1. 2, 3 und 8 in die Position gemäß Fig. 5, 6 und 9 verlängert, so dass das Befestigungsauge 29 gegenüber der Kolbenstange 27 des Arbeitsbreitenzylinders 17 verschoben wird. Das Befestigungsauge 29 wird etwas weiter zum Ende der Kolbenstange 27 verschoben. Somit wird die Grundeinstellung der Verschwenkung des Pflugrahmens mit der vorbeschriebenen Kompensation und Korrektureinstellung wieder hergestellt.

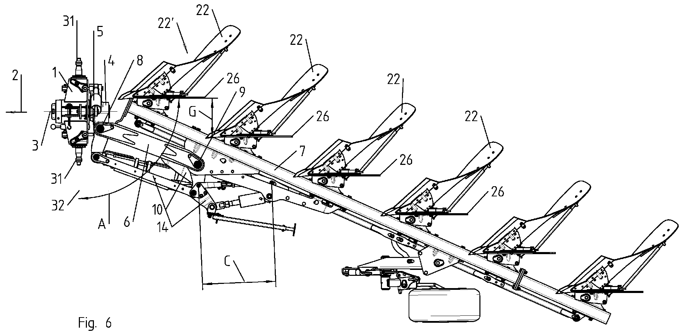

Somit wird der Pflugrahmen 7 durch die vorbeschriebene Verstellung durch das mechanische Stellelement 29 gegenüber der Kolbenstange 27 aus der Position gemäß den Fig.1 bis 4 in die Position gemäß den Fig. 5 und 6 verschwenkt und die ursprüngliche Schnittbreite der Pflugschare 22 und der Arbeitsbreitenbereich wieder hergestellt.

Anstelle das verstellbare mechanische Stellelement 29 als verstellbares Schraubelement, welches dem als Arbeitsbreitenzylinder 17 ausgebildeten zweiten Stellglied 17 zugeordnet ist, kann dieses beispielsweise auch als Exzenterelement ausgebildet sein. Dies lässt sich in einfacher Weise dadurch verwirklichen, dass zumindest einer der Bolzen, mit dem der Arbeitsbreitenzylinder 17 angelenkt ist, als Exzenterbolzen ausgebildet ist oder ihm Exzenterbuchsen zugeordnet sind.

## Patentansprüche

1. Pflug mit einem über eine Querverstellungseinrichtung einem in Betriebsstellung aufrechten Schwenkachse aufweisenden Schwenkgelenk an einem Anbaubock zur Verbindung des Pfluges mit einem landwirtschaftlichen Schlepper verlager- und schwenkbar abgestützten Pflugrahmen und mit an dem Pflugrahmen in zumindest einer Pflugscharreihe angeordneten Pflugschare, so dass durch eine Querverlagerung und Schwenkbewegung des Pflugrahmens die Pflugschare der Pflugscharreihe in ihre gewünschte Arbeitsbreiten- und/oder Erstfurchenschnittbreiteneinstellung zu überführen sind, wobei die einzelnen Pflugschare mittels in Betriebsstellung jeweils eine aufrechte Schwenkachse aufweisender Gelenke zur Parallel- und/oder Anlagedruckeinstellung verschwenkbar am Pflugrahmen angeordnet und mittels einem zwischen den Pflugscharen und dem Anbaubock und/oder mit dem Anbaubock verbundener Zwischenelemente angeordneten erstem Einstellglied einstellbar sind, wobei zwischen dem Pflugrahmen und dem Anbaubock und/oder mit dem Anbaubock verbundener Zwischenelemente ein zweites Stellglied zur Einstellung der Arbeitsbreite des Pfluges angeordnet ist, **dadurch gekennzeichnet, dass** zumindest dem zweiten Stellglied (17) ein verstellbares Stellelement (28, 29, 30), zur zusätzlichen Längenveränderung des zweiten Stellgliedes zugeordnet ist.

2. Pflug nach Anspruch 1, **dadurch gekennzeichnet, dass** das zweite Stellglied (17) motorisch und das zugeordnete Stellelement (28, 29, 30) mechanisch ausgebildet ist.

3. Pflug nach zumindest einem der vorherigen Ansprüche, **dadurch gekennzeichnet, dass** mittels des dem zweiten Stellglied (17) zugeordneten mechanischen Stellelementes (28, 29, 30) die Grundeinstellung der Verschwenkung des Pflugrahmens (7) festlegbar ist.

4. Pflug nach zumindest einem der vorherigen Ansprüche, wobei das zweite motorische Stellglied (17) als eine Kolbenstange (27) aufweisender doppeltwirkender Hydraulikzylinder ausgebildet ist, **dadurch gekennzeichnet, dass** das zugeordnete mechanische Stellelement (28, 29, 30) als Stellschraube oder Stellspindel ausgebildet, dass die Stellschraube (29) oder Stellspindel Bestandteil der Kolbenstange (27) ist.

5. Pflug nach Anspruch 4, **dadurch gekennzeichnet, dass** die Stellschraube (29) oder Stellspindel an dem vorderen Ende der Kolbenstange (27) angeordnet ist.

6. Pflug nach Anspruch 4, **dadurch gekennzeichnet, dass** die Stellschraube (29) oder Stellspindel zwischen dem vorderen Ende der Kolbenstange (27) einerseits und dem Lenker oder Pflugrahmen (7) andererseits angeordnet ist.

7. Pflug nach einem der Ansprüche 1 bis 3, wobei das zweite, motorisch ausgebildete Stellglied als eine Kolbenstange (27) aufweisender doppeltwirkender Hydraulikzylinder (17) ausgebildet ist, **dadurch gekennzeichnet, dass** das mechanische Stellelement als Stellschraube (29) oder Stellspindel ausgebildet, dass die Stellschraube (29) oder Stellspindel zwischen dem der Zylinder) des Hydraulikzylinders einerseits und dem Lenker oder Pflugrahmen andererseits angeordnet ist.

8. Pflug nach zumindest einem der vorherigen Ansprüche, **dadurch gekennzeichnet, dass** das mechanische Stellelement (28, 29, 30) gegenüber dem Stellglied 15-50 mm, vorzugsweise 20-30 mm vorzugsweise über eine Schaubverbindung (30) verstellbar ist.

## Claims

1. Plough with a plough frame supported displaceably and pivotably via a transverse adjustment device a pivot joint, which has a pivot axis which is upright in the operating position, on a headstock for connecting the plough to a agricultural tractor, and with ploughshares arranged in at least one row of ploughshares on the plough frame, and therefore, by means of transverse displacement and pivoting movement of the plough frame, the ploughshares of the row of ploughshares can be transferred into the desired adjustment thereof for the working width and/or cutting width of the first furrow, wherein the individual ploughshares are arranged pivotably on the plough frame by means of joints, which each have an upright pivot axis in the operating position, for the parallel adjustment and/or adjustment of the contact pressure, and can be adjusted by means of a first adjustment member arranged between the ploughshares and the headstock and/or intermediate elements connected to the headstock, wherein a second adjustment member for adjusting the working width of the plough is arranged between the plough frame and the headstock and/or intermediate elements connected to the headstock, **characterized in that** at least the second adjustment member (17) is assigned an adjustable adjustment element (28, 29, 30) for the additional change in length of the second adjustment member.

2. Plough according to Claim 1, **characterized in that** the second adjustment member (17) is of motorized design and the associated adjustment element (28, 29, 30) is of mechanical design.

3. Plough according to at least one of the preceding claims, **characterized in that** the basic adjustment of the pivoting of the plough frame (7) can be fixed by means of the mechanical adjustment element (28, 29, 30) assigned to the second adjustment member (17).

4. Plough according to at least one of the preceding claims, wherein the second motorized adjustment member (17) is designed as a double-action hydraulic cylinder having a piston rod (27), **characterized in that** the associated mechanical adjustment element (28, 29, 30) is designed as an adjustment screw or adjustment spindle, and **in that** the adjustment screw (29) or adjustment spindle is part of the piston rod (27).

5. Plough according to Claim 4, **characterized in that** the adjustment screw (29) or adjustment spindle is arranged at the front end of the piston rod (27).

6. Plough according to Claim 4, **characterized in that** the adjustment screw (29) or adjustment spindle is arranged between the front end of the piston rod (27) and the link or plough frame (7).

7. Plough according to one of Claims 1 to 3, wherein the second adjustment member, which is of motorized design, is designed as a double-action hydraulic cylinder (17) having a piston rod (27), **characterized in that** the mechanical adjustment element is designed as an adjustment screw (29) or adjustment spindle, and **in that** the adjustment screw (29) or adjustment spindle is arranged between the the cylinder) of the hydraulic cylinder, on the one hand, and the link or plough frame on the other hand.

8. Plough according to at least one of the preceding claims, **characterized in that** the mechanical adjustment element (28, 29, 30) is adjustable 15-50 mm, preferably 20-30 mm, in relation to the adjustment member, preferably via a screw connection (30).

## Revendications

1. Charrue comprenant un cadre de charrue supporté de manière déplaçable et pivotante au moyen d'un dispositif de déplacement transversal une articulation pivotante présentant un axe de pivotement vertical dans la position de fonctionnement au niveau d'un bloc de montage pour la connexion de la charrue à une remorque agricole, et des socs de charrue disposés sur le cadre de charrue en au moins une rangée de socs de charrue de telle sorte que par un déplacement transversal et un mouvement de pivotement du cadre de charrue, les socs de charrue de la rangée de socs de charrue puissent être transférés dans leur ajustement souhaité en largeur de travail et/ou en largeur de coupe du premier sillon, les socs de charrue individuels étant disposés de manière à pouvoir pivoter sur le cadre de charrue au moyen d'articulations présentant à chaque fois un axe de pivotement vertical dans la position de fonctionnement pour l'ajustement de la pression d'application et/ou l'ajustement parallèle et pouvant être ajustés au moyen d'un premier organe d'ajustement disposé entre les socs de charrue et le bloc de montage et/ou des éléments intermédiaires connectés au bloc de montage, un deuxième organe de réglage pour l'ajustement de la largeur de travail de la charrue étant disposé entre le cadre de charrue et le bloc de montage et/ou des éléments intermédiaires connectés au bloc de montage, **caractérisée en ce qu'**au moins un élément de réglage réglable (28, 29, 30) est associé au deuxième organe de réglage (17) pour la variation en longueur supplémentaire du deuxième organe de réglage.

2. Charrue selon la revendication 1, **caractérisée en ce que** le deuxième organe de réglage (17) est réalisé sous forme de moteur et l'élément de réglage associé (28, 29, 30) est réalisé sous forme mécanique.

3. Charrue selon au moins l'une quelconque des revendications précédentes, **caractérisée en ce que** l'ajustement de base du pivotement du cadre de charrue (7) peut être fixé au moyen de l'élément de réglage mécanique (28, 29, 30) associé au deuxième organe de réglage (17).

4. Charrue selon au moins l'une quelconque des revendications précédentes, dans laquelle le deuxième organe de réglage motorisé (17) est réalisé sous forme de cylindre hydraulique à double action présentant une tige de piston (27), **caractérisée en ce que** l'élément de réglage mécanique associé (28, 29, 30) est réalisé sous forme de vis de réglage ou de broche de réglage, et **en ce que** la vis de réglage (29) ou la broche de réglage fait partie de la tige de piston (27).

5. Charrue selon la revendication 4, **caractérisée en ce que** la vis de réglage (29) ou la broche de réglage est disposée au niveau de l'extrémité avant de la tige de piston (27).

6. Charrue selon la revendication 4, **caractérisée en ce que** la vis de réglage (29) ou la broche de réglage est disposée entre l'extrémité avant de la tige de piston (27) d'une part et le bras oscillant ou le cadre de charrue (7) d'autre part.

7. Charrue selon l'une quelconque des revendications 1 à 3, dans laquelle le deuxième organe de réglage réalisé sous forme de moteur est réalisé sous forme de cylindre hydraulique (17) à double action présentant une tige de piston (27), **caractérisée en ce que** l'élément de réglage mécanique est réalisé sous forme de vis de réglage (29) ou de broche de réglage, et **en ce que** la vis de réglage (29) ou la broche de réglage est disposée entre le le cylindre) du cylindre hydraulique d'une part et le bras oscillant ou le cadre de charrue d'autre part.

8. Charrue selon au moins l'une quelconque des revendications précédentes, **caractérisée en ce que** l'élément de réglage mécanique (28, 29, 30) peut être réglé par rapport à l'organe de réglage sur 15-50 mm, de préférence sur 20-30 mm, de préférence par le biais d'une connexion à vis (30).
